# EUROPEAN PATENT APPLICATION

(11) **EP 2 184 593 A1**
(43) Date of publication of application: **12.05.2010**
(21) Application number: 09175062.0
(22) Date of filing: 04.11.2009
(51) Int. Cl.: G01G 19/393

(54) **Perfected machine for combined weighing of fruits and vegetables**

(30) Priority: 05.11.2008 IT RA20080043
(71) Applicant: Roan S.R.L., 47023 Cesena (IT)
(72) Inventor: Fiumana, Roberto, 47023, Cesena (FC) (IT)
(74) Representative: di Francia, Vincenzo

(57) **Abstract**

Figure 9 shows, through a vertical section, the planned machine in a phase of its functioning cycle. Such machine comprises a number of weighing units comprising a load cell (30) which, connected to a hopper (31) closed by a door (32) driven by pneumatic jack (33), transmits to the electronic controller of the machine the weight measured in the hopper in order to form weighed portions to be discharged in collecting sectors below delimited lengthwise by two crossbars (41), the ends of which are fastened to two chain-driven circuits (40, 47) moved simultaneously by one geared motor. Such crossbars (41), in the upper section of the drive circuit, move on a horizontal surface comprising a number of planes in sequence the first of which (43), located just underneath the scales hoppers, is fixed while the others (44) can be tilted downwards. To prevent the products pushed by the crossbars (41) onto the surface of planes (43-44) from scraping and getting damaged, each of the crossbars is equipped with a cloth (42) which receives the weighed portions and moves them up to flap (44) whose inclined opening will let the products roll down into one of the outflow channels of the machine, each one of which is delimited by a couple of fixed and parallel sideboards (5) suspended above a belt (7) for conveying the products outside of the machine.

## Description

The present invention regards a perfected machine for combined weighing of fruits and vegetables, which is able to automatically prearrange determined quantities of irregular-shaped products, in particular fruits and vegetables, intended to be sold in supermarkets and wrapped in small baskets or other wrappings all having an identical weight or close to the indicative target one.

This application is about a machine for the so-called combinatorial weighing controlled by a computer that practically consists of automatically combining a determined number of chosen sub-portions, after the weighing of a higher number of sub-portions available at that moment, in order to compose a set which, with respect to all the possible combinations at that moment, has the closest weight to the indicative one preset in the machine.

In order to do that, known machines make use of a determined number of weighing hoppers all connected to the computer that receives from each hopper an input signal indicating the weight of the formed sub-portion.

Therefore the computer, once evaluated all the possible combinations with the sub-portions available at that moment and with respect to the indicated relative weights, chooses the combination which most approximates the target indicative weight and transmits output signals commanding to the chosen weighing hoppers, namely the ones belonging to the chosen combination, the discharge of the contained sub-portions. The successive combinatorial weighing cycle is started after new filling of the hoppers remained empty and signalling of the new weights to the computer.

The number of weighing hoppers in a weighing machine is limited because of mere considerations of overall dimensions of the machine and of the necessity to maintain relatively brief the pathways through which every sub-portion must reach the successive zone for wrapping the entire portion. Such a necessity is mainly warned when the weighing hoppers are side by side in sequence, that is in a disposition which, having the advantage of avoiding the simultaneous arrival of more sub-portions at the discharge and the consequent risk of obstruction and stoppage of the machine, opposes the drawback of a more complex construction for the bigger number of unloading channels.

It is further to be considered that feeding of the weighing machines is generally operated along vibrating planes that receive the products from suitable loading belts and transfer said products, vibrating, towards the weighing hoppers. Obviously, the advancing speed of the products is linked to the intensity of the vibrations of the transfer plane and therefore reducing said vibrations, to protect the integrity of the products, is impossible without compromising said transfer speed and the productivity of the same machine.

The scope of the present invention is that of devising a perfected machine suitable to operate the combined weighing of irregular-shaped products, in particular fruits and vegetables, without the cited limitations and drawbacks.

In order to better describe the machine according to the invention four tables of drawings have been attached, for indicative and non limitative purpose wherein:

figures 1-2-3 show, in order, two lateral views and a plan view of the weighing machine according to the invention;

figure 4 shows the vertical section view according to the X-X line referred to in figure 3;

figure 5 shows a perspective view of the weighing machine, represented without a lateral wall in order to better show the inside thereof;

figures 6 and 7 show respectively a lateral view and a perspective view of the weighing hoppers;

figure 8 shows a perspective view of the mobile member acting simultaneously along all the feeding channels of the weighing hoppers in order to make the descent of the fruits and vegetables easier;

Figures 9 and 10 show, through vertical sections, two phases of the functioning cycle of the machine.

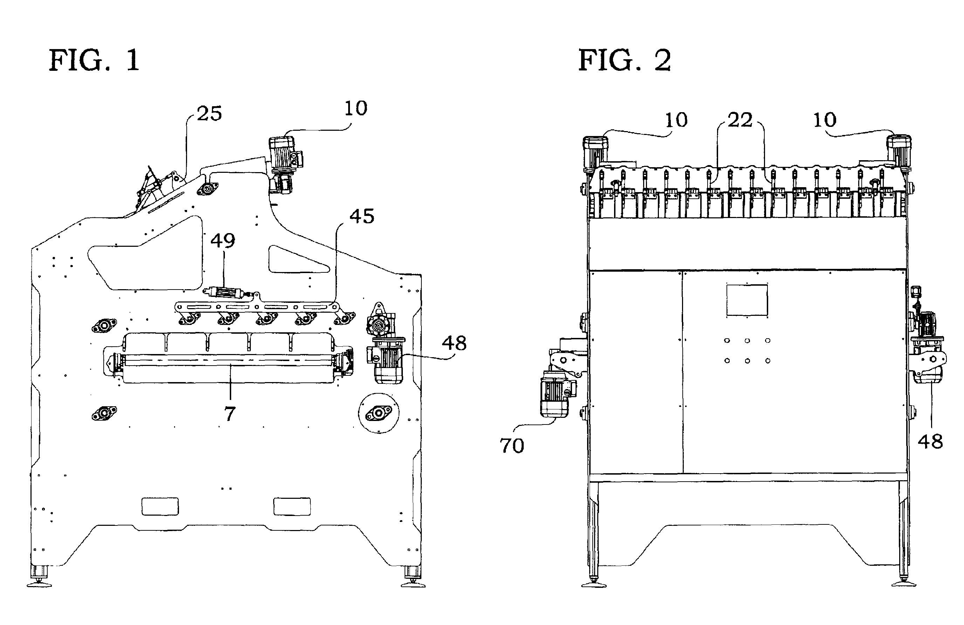

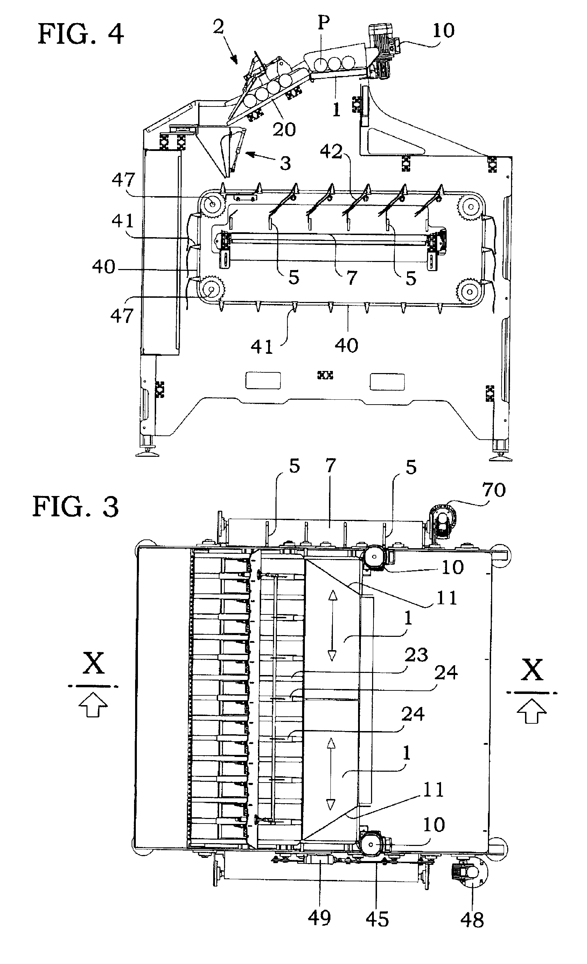

From the examination of the attached drawings one deduces that the products P reach, anyway transported, the central zone of the upper part of the weighing machine where two conveyor belts 1 (fig. 2 and 3), coplanar, aligned and each driven by a geared motor 10, move alternatively in the two directions, simultaneously but in opposite directions, to transfer the conveyed products P into a number of distribution channels 2, in this case fourteen, parallel to each other and all of them facing the lowest edge of conveyors 1, which are inclined transversely.

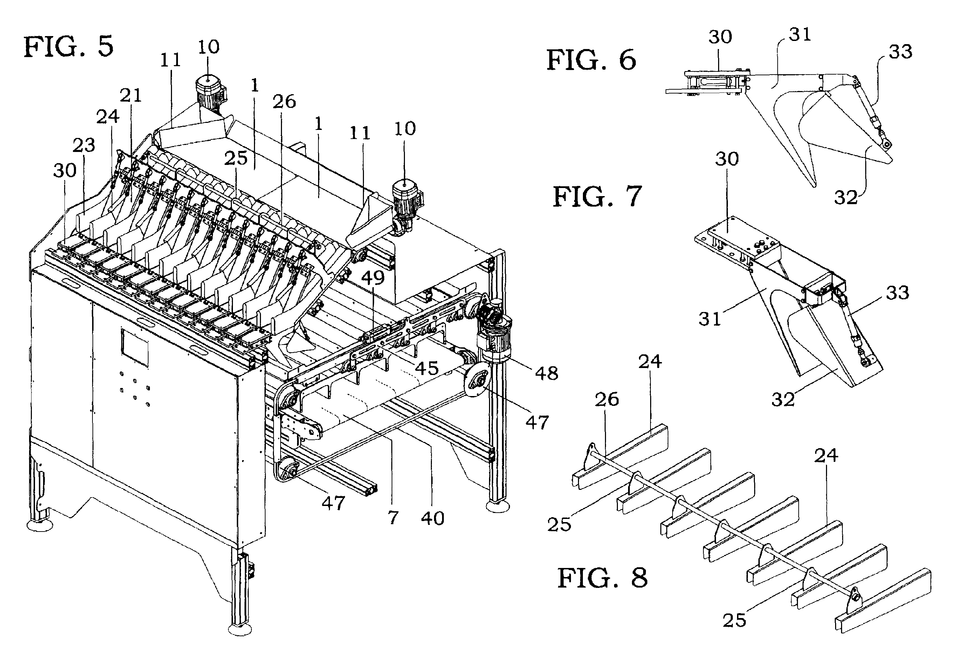

Sideboards 11 are placed at the two opposite ends of the two conveyor belts 1 (fig. 3 and 5) to help the inclined belts 1 to convey into the distribution channels 2, the ones prearranged to the filling of the hoppers of the weighing units 3 below, the products P which are moved against such sideboards during one of the two alternate movements of belts 1.

In particular, each channel 2 comprises a chute 20 delimited by two sideboards 23 and an upper door 21 which, driven by a pneumatic jack 22, is suddenly opened and closed by the electronic controller of the weighing machine to discharge by gravity a defined volumetric quantity of products into the relevant weighing units 3. The weighing unit 3 (fig. 6 and 7) comprises a load cell 30 which, connected to a hopper 31 closed by a door 32 driven by a pneumatic jack 33, transmits to the electronic controller of the machine the weight measured in the hopper so that the controller can compare such weight with the one of the remaining hoppers and choose among all of them the combination which most approximates the target weight to obtain.

In order to help the fruits and vegetables to slide down between the two sideboards 23 placed on the sides of each chute 20, one of the two sideboards of each channel is covered with an inverse U-shaped element 24 which, as a result, acts in two adjacent channels where, driven through a flap 25 by a horizontal shaft 26 moved by pneumatic jacks 27, it performs alternate movements along the longitudinal axis, which only concern one of the two sides of each channel to ensure a proper sliding of the products.

In a further possible embodiment, both sideboards 23 of each channel can be covered by inverse U-shaped elements 24 belonging to two units, each driven by pneumatic jacks 27, which perform alternate, opposite reciprocal movements along the longitudinal axis, which ensure the proper sliding of the products in the concerned channels.

In order to help the outflow of the products also from the hoppers 31 of the weighing units 3, the lateral walls of each hopper and the lateral walls of the relative door 32 have asymmetric and reciprocally corresponding profiles in order to ensure, at the lifting of the door 32, the descent of the products in the collecting sectors below (fig 6 and 7).

After having selected the weighing hoppers that compose the portion of products with the weight which is the closest possible and never lower than the target one, the electronic controller opens the relative doors 32 to discharge the contents thereof in the collecting zone below where there are in succession, one at a time, the sectors (in this case six) suitable to each receive all the sub-portions forming the portion ready to be wrapped (fig 4, 9 and 10).

Each of the aforesaid sectors turns out to be delimited lengthwise by two crossbars 41, the ends of which are fastened to two circuits simultaneously driven by one geared motor 48, and each of them constituted by a chain 40 and four sprockets 47 or other appropriate drive elements. Such crossbars move on a horizontal surface constituted by a number of planes having width almost equal to the centre distance of the crossbars. The first of the mentioned planes 43, that is the one just below the scales hoppers, is fixed while the others 44, in this case five, can be tilted downwards being hinged along one of the two sides parallel to the crossbars.

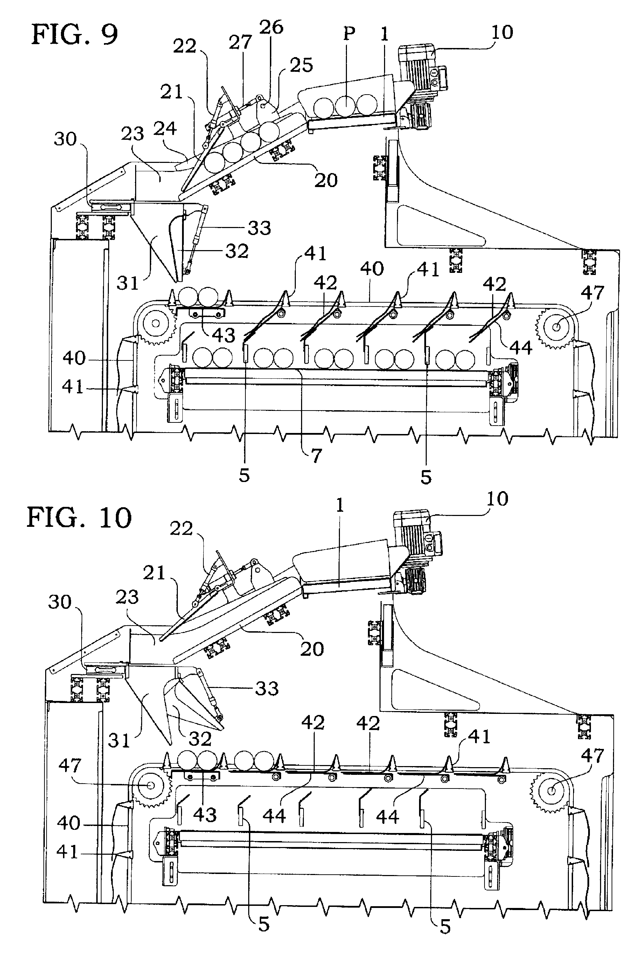

The products discharged from the chosen weighing units and deposited in the first sector, the one in correspondence with the fixed plane 43, are dragged by the crossbars 41 over the mobile planes or flaps 44 located at that moment in horizontal position (fig. 10).

As can be seen in the figures 1 and 5, such flaps 44 have rotatable supports at their ends and all of them are connected in an articulated manner, in one of these two ends, to an element 45, the alternate movements of which, driven by a pneumatic jack 49 controlled by the controller of the machine, cause the simultaneous opening or closing of such flaps 44.

In order to prevent the products pushed by crossbars 41 onto the surface of planes 43-44 from scraping and getting damaged, each of the crossbars is equipped with a cloth 42 which receives the weighted portions and, operated by the crossbar, moves them up to flap 44 whose inclined opening, helped by cloth 42, will let the products roll down into one of the outflow channel of the machine channels placed below.

Such outflow channels are delimited by a number of fixed and parallel sideboards 5 suspended above a conveyor belt 7 which, driven by a geared motor 70, moves the products toward the pick-up zone outside of the machine. It is not excluded that such conveyor be completed with transversal inserts which guide the products and ensure an entire weighed portion to come out of the weighing machine.

From the description, one deduces that the considerable level of automation of the machine allows an almost total absence of downtimes and a considerable increase of the productivity with respect to the known machines. Furthermore, the overlapping of diverse working phases, for example the outflow of the portions from the machine by means of the belt 7 meanwhile the upper sectors of the circuit 40 are getting filled, allows to use speeds such as not to damage the treated products, for which the greatest delicacy possible is necessary.

Fixed the illustrated and described general characteristics, further modifications or variations of the machine according to the invention are not excluded, such modifications or variations, however comprised in the patent scope, could among others concern a different number of the in-line distributors 2 or of the collecting sectors and therefore of the outflow channels, in relation with the overall dimensions provided for the machine and/or to the productivity which is intended to be reached, or also the substitution of the conveyor belt 7 with other devices appropriate to the translation of the weighed doses.

## Claims

1. **Perfected machine for combined weighing of fruit and vegetables,** comprising a number of weighing units (3) for the combined weighing of products (P) which, in weighed portions, reach appropriate collecting zones and then come out of the machine to move to the next filling station, wherein such collecting zones comprise a number of sectors with movable bottoms which open automatically and simultaneously to discharge each weighed portion onto a corresponding number of appropriate conveyors on the underside which transfer all of the portions out of the machine simultaneously, while the aforesaid collecting sectors get ready to receive the new weighed portions.

2. **Perfected machine for combined weighing of fruit and vegetables,** as in claim 1, wherein two coplanar, aligned conveyor belts (1), each driven by a geared motor (10), move alternately in the two directions, simultaneously but in opposite direction, to transfer the conveyed products (P) into a number of distribution channels (2), parallel to each other and all of them facing the lowest edge of conveyors (1), which are inclined transversely.

3. **Perfected machine for combined weighing of fruit and vegetables**, as in claim 2, wherein the distribution channels (2), coplanar and parallel to each other, are inclined to reach and gravity-feed the hoppers (31) of the relevant weighing units (3) on the underside.

4. **Perfected machine for combined weighing of fruit and vegetables,** as in claim 2, wherein sideboards (11) are placed at the two opposite ends of the two conveyor belts (1) to help the inclined belts (1) to convey into the distribution channels (2) the products (P) which are moved against such sideboards during one of the two alternate movements of belts (1).

5. **Perfected machine for combined weighing of fruit and vegetables**, as in claim 3, wherein each channel (2) comprises a chute (20) delimited by two sideboards (23) and an upper door (21) which, driven by a pneumatic jack (22), is opened and closed by the electronic controller of the weighing machine to gravity-discharge a defined volumetric quantity of products into the relevant weighing units (3).

6. **Perfected machine for combined weighing of fruit and vegetables**, as in claim 5, wherein the weighing unit (3) comprises a load cell (30) which, connected to hopper (31) closed by door (32) driven by pneumatic jack (33), transmits to the electronic controller of the machine the weight measured in the hopper so the controller can compare such weight with the one of the remaining hoppers and choose among all of them the combination which most approximates the target weight to obtain.

7. **Perfected machine for combined weighing of fruit and vegetables**, as in claim 5, wherein, to help the fruit and vegetables to slide down between the two sideboards (23) placed at the sides of each chute (20), at least one of the two sideboards of each channel is moved by devices which act simultaneously along all the channels feeding the hoppers.

8. **Perfected machine for combined weighing of fruit and vegetables**, as in claim 7, wherein such devices are arranged to cover one of the two sideboards of each channel with an inverse U-shaped element (24) which, as a result, acts in two adjacent channels where, driven through a flap (25) by a horizontal shaft (26) moved by pneumatic jacks (27), it performs alternate movements along the longitudinal axis, which only concern one of the two sides of each channel to ensure a proper sliding of the products.

9. **Perfected machine for combined weighing of fruit and vegetables**, as in claim 8, wherein both sideboards of each channel are covered by inverse U--shaped elements (24) belonging to two units, each driven by pneumatic jacks (27), which perform alternate, opposite reciprocal movements along the longitudinal axis, which ensure the proper sliding of the products in the concerned channels.

10. **Perfected machine for combined weighing of fruit and vegetables**, as in claim 1, wherein each collecting sectors is delimited lengthwise by two crossbars (41), the ends of which are fastened to two drive circuits moved simultaneously by one geared motor (48), and each of them comprising a chain (40) and four sprockets (47) or other appropriate drive elements.

11. **Perfected machine for combined weighing of fruit and vegetables**, as in claim 10, wherein such crossbars (41), in the upper section of the drive circuit, move on a horizontal surface comprising a number of planes in sequence, the width of which is almost equal to the centre distance of the crossbars.

12. **Perfected machine for combined weighing of fruit and vegetables**, as in claim 11, wherein the first of the mentioned planes (43), which is the one just underneath the scales hoppers, is fixed, while the others (44) can be tilted downwards.

13. P**erfected machine for combined weighing of fruit and vegetables**, as in claim 12, wherein such tilting planes or flaps (44) have rotating supports at their ends and all of them are connected, in an articulated manner, in one of these two ends, to an element (45) the alternate movements of which, driven by a pneumatic jack (49) controlled by the machines controller, cause the simultaneous opening or closing of such flaps (44).

14. **Perfected machine for combined weighing of fruit and vegetables**, as in claims 11-12-13, wherein, in order to prevent the products pushed by crossbars (41) onto the surface of planes (43-44) from scraping and getting damaged, each of the crossbars is equipped with a cloth (42) which receives the weighed portions and, operated by the crossbar, moves them up to flap (44) whose inclined opening, helped by cloth (42), will let the products roll down into one of the outflow channels of the machine placed underneath.

15. **Perfected machine for combined weighing of fruit and vegetables,** as in claim 14, wherein such outflow channels are delimited by a number of fixed and parallel sideboards (5) suspended above a conveyor belt (7) which, driven by a geared motor (70), moves the products toward the pick-up zone outside of the machine.

16. **Perfected machine for combined weighing of fruit and vegetables**, as in claim 15, wherein such conveyor (7) is completed with transverse inserts which guide the products and ensure an entire weighed portion to come out of the weighing machine.
